Europäisches Patentamt

(19) European Patent Office

Office européen des brevets

(11) Numéro de publication : **0 065 433**
**B1**

(12) **FASCICULE DE BREVET EUROPÉEN**

(45) Date de publication du fascicule du brevet :
21.01.87

(21) Numéro de dépôt : **82400674.6**

(22) Date de dépôt : **15.04.82**

(51) Int. Cl.⁴ : **G 01 N 25/18**

(54) **Dispositif et procédé de mesures thermiques sur parois.**

(30) Priorité : **17.04.81 FR 8107774**

(43) Date de publication de la demande :
**24.11.82 Bulletin 82/47**

(45) Mention de la délivrance du brevet :
**21.01.87 Bulletin 87/04**

(84) Etats contractants désignés :
**BE DE GB IT LU NL**

(56) Documents cités :
**DE-A- 2 939 053
FR-A- 1 456 031
FR-A- 2 188 159
FR-A- 2 245 247
US-A- 3 111 844
US-A- 3 733 887
Le dossier contient des informations techniques présentées postérieurement au dépôt de la demande et ne figurant pas dans le présent fascicule.**

(73) Titulaire : **CENTRE EXPERIMENTAL DE RECHERCHES ET D'ETUDES DU BATIMENT ET DES TRAVAUX PUBLICS
12, rue Brancion
F-75015 Paris (FR)**

(72) Inventeur : **Marechal, Jean-Christian
11, rue de Magdebourg
F-75016 Paris (FR)**

(74) Mandataire : **Schrimpf, Robert et al
Cabinet Regimbeau 26, Avenue Kléber
F-75116 Paris (FR)**

Jouve, 18, rue St-Denis, 75001 Paris, France

## Description

L'invention concerne les mesures thermiques sur parois, telles que les murs de bâtiments.

On sait mesurer en laboratoire le coefficient de transmission thermique, habituellement noté K, d'une paroi de géométrie donnée, construite en un matériau donné. Mais les résultats de telles mesures n'ont souvent qu'un lointain rapport avec ce qui se passe dans un mur bien particulier d'une habitation déjà construite, pour laquelle on recherche, par exemple, une économie sur l'énergie de chauffage.

Il est donc souhaitable de procéder à des mesures en site naturel. Jusqu'à présent, cela n'a pu être fait que sous réserve d'erreurs importantes, qui peuvent dépasser 100 %, sur la valeur du coefficient K de transmission.

Les DE-A-2 939 053 et US-A-3 733 857 décrivent notamment de tels dispositifs de la technique antérieure, dans lesquels la mesure du coefficient K est réalisée à partir d'une mesure de flux thermique et d'une mesure différentielle de température de part et d'autre d'une paroi.

La présente invention vient fournir des moyens qui permettent une mesure « *in situ* » avec une précision bien meilleure.

A cet effet, l'invention propose un dispositif détecteur distribué pour la mesure du coefficient de transmission thermique K d'une paroi, qui comporte, en combinaison :

— un premier réseau fluxmétrique plan, à placer près de la paroi, et recouvrent une zone de contour prédéterminé,

— un second réseau fluxmétrique plan, ajouté sur le premier, et de même contour externe que lui,

— entre les deux réseaux fluxmétriques, un élément plan capable de transferts thermiques ajustables,

— des moyens permettant de détecter la différence des températures moyennes entre la face du premier réseau qui est en contact avec la paroi et une zone voisine en surface de la paroi,

— des moyens pour commander l'élément de transfert thermique ajustable dans le sens tendant à annuler la différence de température détectée, ce qui permet de compenser automatiquement la résistance thermique supplémentaire introduite par le dispositif de mesure,

— des moyens d'acquisition des données de températures d'ambiance $T_{ae}$, $T_{ai}$ de chaque côté de la paroi, et de flux thermique $\Phi$, traversant la zone de contour prédéterminé, à partir d'au moins le premier réseau fluxmétrique, et

— des moyens de calcul pour déterminer le rapport $\Sigma\Phi/\Sigma\Delta T$ des flux thermiques cumulés aux différences de température cumulées $\Delta T = T^{ae} - T_{ai}$.

Dans un mode de réalisation préférentiel, l'élément de transfert thermique ajustable est un générateur électrothermique.

Dans une réalisation particulière, cet élément de transfert thermique comprend un circuit formant résistance chauffante solidaire d'un support plan.

Au sein de l'unité de détection précitée, les moyens de détection de la différence de température comprennent avantageusement, sur un support plan, un premier motif d'éléments thermosensibles interconnectés, le motif étant placé adjacent par l'extérieur au contour des réseaux fluxmétriques, et un second motif d'éléments thermosensibles interconnectés, ce second motif étant placé entre le premier réseau fluxmétrique et la paroi.

Dans le mode de réalisation préférentiel, les deux motifs interconnectés sont respectivement placés dans les bras opposés d'un pont de Wheatstone, faisant partie des moyens de commande de transfert thermique.

Dans une réalisation particulière, chacun des réseaux fluxmétriques comporte au moins un assemblage en série additive de couples thermoélectriques alternativement disposés de part et d'autre d'une paroi auxiliaire.

Avantageusement, chaque réseau fluxmétrique est subdivisé en secteurs accessibles individuellement.

L'invention propose également un procédé de mesure du coefficient de transmission thermique d'une paroi, sans apporter d'influences thermiques à la paroi. Ce procédé comporte les opérations suivantes :

a) mesurer répétitivement les températures d'ambiance $T_{ae}$, $T_{ai}$ de chaque côté de la paroi,

b) mesurer aux mêmes instants le flux thermique $\Phi$ traversant une zone de contour (F) prédéterminé d'un côté de la paroi,

c) déterminer le rapport $\Sigma\Phi/\Sigma\Delta T$ des flux thermiques cumulés aux différences de températures cumulées $\Delta T = T_{ae} - T_{ai}$, et,

d) poursuivre les opérations a) à c) jusqu'à ce que ledit rapport tende vers une valeur sensiblement constante.

Très avantageusement, à l'opération a), on mesure en outre les températures de surface de chaque côté de la paroi, tandis qu'à l'opération b) chaque valeur de flux est corrigée selon les coefficients d'échange entre la paroi et l'ambiance de part et d'autre de celle-ci. Ces coefficients d'échange sont établis à partir des températures d'ambiance et de surface de part et d'autre de la paroi.

D'autres caractéristiques et avantages de l'invention apparaîtront à la lecture de la description détaillée qui va suivre, ainsi qu'à l'examen des dessins annexés, sur lesquels :

la figure 1 illustre schématiquement une bande de couples thermoélectriques cuivre-constantan servant de base de la réalisation des réseaux fluxmétriques selon l'invention ;

la figure 2 illustre sous forme partielle l'un des réseaux fluxmétriques selon la présente invention ;

la figure 3 illustre plus schématiquement et sous forme complète l'un des réseaux fluxmétriques de l'invention ;

la figure 4 illustre schématiquement un mode de réalisation du dispositif de transfert thermique à résistance chauffante selon l'invention ;

la figure 5 illustre schématiquement la partie de l'unité de détection selon l'invention comprenant les deux réseaux fluxmétriques qui prennent en sandwich la plaque à résistance chauffante de la figure 4 ;

la figure 6 illustre schématiquement un mode de réalisation préférentiel des moyens permettant une détection de la différence de température de la paroi entre la zone de l'unité de détection et une zone périphérique externe à celle-ci ;

la figure 7 illustre le schéma électrique de principe d'un régulateur thermique destiné à travailler avec l'unité de détection selon l'invention ;

la figure 8 illustre très schématiquement la mise en place de l'unité de détection thermique sur une paroi ;

la figure 9 illustre de manière plus complète le dispositif de mesure selon l'invention ; et

la figure 10 illustre schématiquement le dispositif selon l'invention, avec les différentes valeurs de mesures qui vont intervenir pour la mise en œuvre du procédé selon l'invention.

Sur de nombreux points, la configuration géométrique de certains moyens de l'invention est importante. A cet égard, les dessins annexés sont à incorporer à la présente description, pour servir en tant que de besoin à la définition de l'invention.

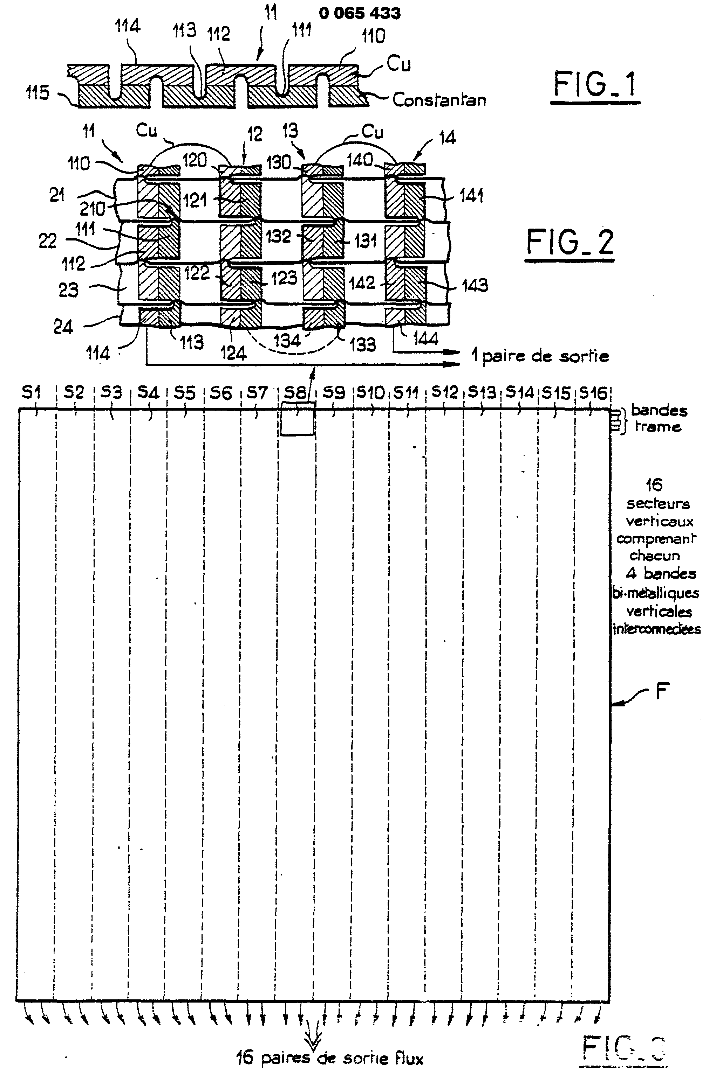

Sur la figure 1, on voit une bande bi-métallique, comprenant des parties en cuivre 110, 112 et 114, et des parties en constantan 111, 113, et 115, soudées les unes aux autres en alternance. En pratique, pour réaliser une telle bande bi-métallique, on place côte-à-côte une bande de cuivre et une bande de constantan, que l'on soude et lamine ensemble, par exemple à l'épaisseur de 0,1 mm pour 6 mm de large. La bande bi-métallique est alors découpée pour former des encoches profondes, qui permettent d'y séparer des couples thermoélectriques cuivre-constantan alternés, qui représentent successivement des soudures chaudes et des soudures froides.

La figure 2 illustre comment on peut réaliser un réseau fluxmétrique pour la mise en œuvre de l'invention à partir d'une telle bande de liaison cuivre-constantan. On voit sur cette figure 2 que la partie 110 de la bande est en bord de la figure 1. Après le passage étroit existant au bord de l'échancrure, la bande cuivre-constantan passe sous une bande 21, constituée par exemple d'un phénoplaste armé de tissu. La première partie de la bande de constantan 111 est également au-dessous de la bande 21, mais, après l'échancrure, la seconde partie de cette bande 111 vient à son tour au-dessus d'une bande adjacente 22. On passe alors à la bande de cuivre 112, dont la première partie est également au-dessus de la bande 22, tandis qu'après son échancrure, sa seconde partie passe au-dessous d'une troisième bande de phénoplaste armé de tissu 23. La première partie de la bande de constantan 113 est également au-dessous de la bande 23, tandis que sa seconde partie passe au-dessus d'une bande 24, illustrée seulement en partie, et ainsi de suite. A une distance à peu près égale à la largeur des bandes cuivre-constantan, les bandes de phénoplaste de 21 à 24 coopèrent avec une deuxième bande de cuivre-constantan, notée généralement 12, et qui passe tout d'abord au-dessus de la bande 21 au niveau de sa liaison cuivre 120 constantan 121, puis au-dessous de la bande 22 au niveau de sa liaison constantan 121-cuivre 122, ensuite au-dessus de la bande 23 par sa liaison cuivre 122-constantan 123, et enfin en dessous de la bande 24 par sa liaison constantan 123 cuivre 124, et ainsi de suite. De la même manière, deux autres bandes 13 et 14 sont représentées un peu plus loin sur la figure 2, la bande 13 étant disposée comme la bande 11, et la bande 14 comme la bande 12. On observera que les deux premiers chiffres correspondent au numéro de la bande, tandis que le dernier chiffre de chaque référence numérique d'une bande de thermocouple correspond à l'ordre des jonctions cuivre et constantan.

Il apparaît immédiatement qu'un tel réseau de thermocouples est constitué par un tissage des bandes cuivre-constantan telles que celles de la figure 1 avec des bandes transversales en phénoplaste armé de tissu, telles que 21 à 24, ce tissage étant réalisé à la façon d'une vannerie de précision. Dans les bandes de phénoplaste telles que 21, des encoches telles que 210 permettent le passage des ponts étroits existant dans chaque bande pour séparer les deux jonctions de thermocouple adjacentes, sur le plan thermique. L'ensemble des bandes de phénoplaste 21 à 24 constitue une paroi auxiliaire, et l'on voit, si l'on prend par exemple la première bande de thermocouples à gauche de la figure 2, qu'une jonction cuivre-constantan va se trouver vers l'arrière de la figure, donc vers l'arrière de la paroi auxiliaire, tandis que la jonction suivante constantan-cuivre va se trouver en avant de la paroi auxiliaire, puis la jonction suivante cuivre-constantan en arrière de la paroi, et ainsi de suite. L'homme de l'art comprendra que l'on réalise ainsi un assemblage en série additive des couples thermoélectriques constitués par les jonctions cuivre-constantan. Cette disposition permet donc de mesurer en série les forces électromotrices des thermocouples correspondant aux différences de températures existant de part et d'autre de la mince paroi constituée par les bandes de phénoplaste armé de tissu. On peut accéder de cette manière à une mesure du flux thermique traversant cette mince paroi.

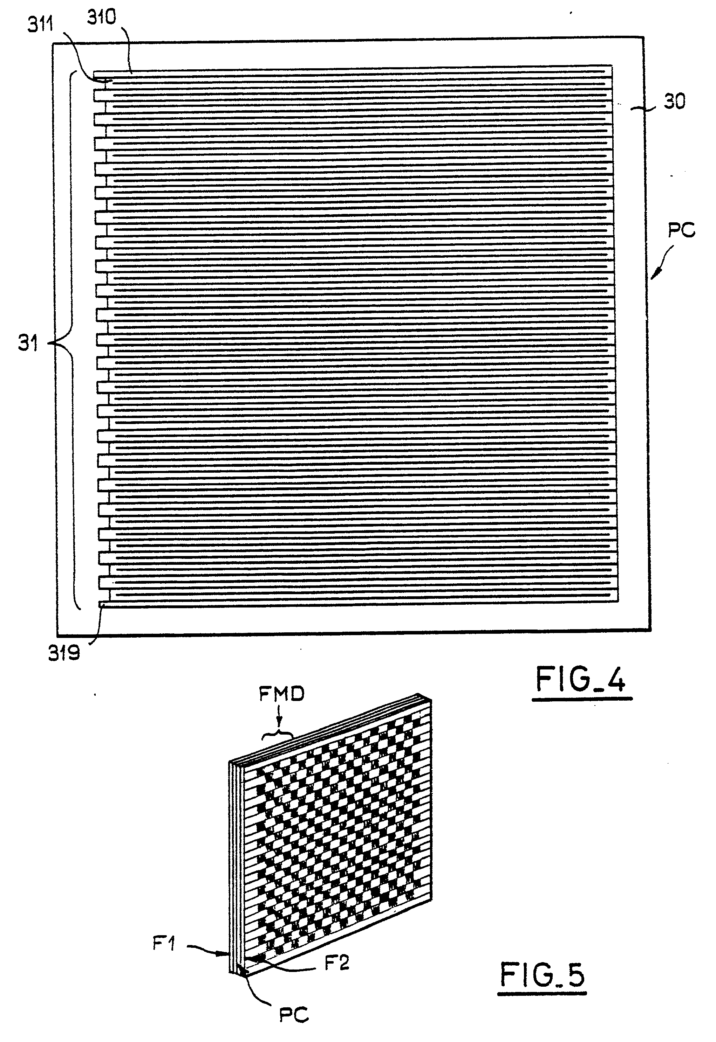

Sans détailler les éléments de la figure 2 de nouveau, la figure 3 illustre sous forme d'une vue d'ensemble l'un des réseaux fluxmétriques dans le mode de réalisation actuellement préféré de l'invention. Ce réseau fluxmétrique est divisé en seize secteurs verticaux S1 à S16, qui comprennent chacun quatre bandes bimétalliques verticales, interconnectées les unes aux autres. Pour mieux comprendre cette interconnexion, on se référera à la figure 2, où l'on voit qu'en partie haute de la figure l'élément de cuivre 110 est relié à l'élément de cuivre 120 de la bande adjacente, tandis que l'élément de cuivre 130 est relié à l'élément de cuivre 140 de la bande adjacente 14. A l'autre extrémité du secteur concerné, qui est par exemple le secteur S8 de la figure 3, on aura une connexion d'entrée sur l'un des éléments, de préférence en cuivre, telle que 114 sur la figure 2 (bien qu'en fait la liaison soit située plus loin, à l'autre extrémité du secteur et suite). Au bas de la bande de thermocouple 12, est également effectuée une liaison électrique entre deux zones en cuivre ou en constantan, suivant le nombre de couples thermoélectriques qui existent sur la longueur totale du secteur S8. Enfin, au bas de la bande de thermocouple 14, on reprend une liaison en cuivre, sur un secteur de cuivre tel que 144. Les deux liaisons entre les éléments tels que 114 et 144 vont constituer la paire de connexions de sortie de l'un des secteurs verticaux tels que S8. Comme il y a seize secteurs S1 à S16, la sortie d'informations fluxmétriques comprend donc seize paires de connexions de sortie de flux. Et chaque paire va recevoir une force électromotrice représentative du flux thermique global traversant la section verticale de capteurs de flux associé.

Les bandes de trame en phénoplaste armé de tissu ne sont pas représentées sur la figure 3, l'esquisse faite en haut et à droite de cette figure rappelant simplement leur existence, transversalement par rapport aux seize secteurs verticaux S1 à S6. Sur la figure 3, on désigne également par F le contour externe d'un réseau fluxmétrique ainsi réalisé.

En pratique, il a été réalisé de cette manière une plaque fluxmétrique comportant seize bandes de 83 cm de long, pour environ 5,2 cm de large. Bien que l'ensemble des capteurs de flux existant dans une telle plaque puisse être globalement mis en série, il est considéré comme préférable de définir un certain nombre de secteurs indépendants, ce qui permet d'analyser, au moins dans un sens de la plaque, la répartition du flux total mesuré. Chaque réseau fluxmétrique possède globalement des dimensions extérieures d'environ 0,84 × 0,84 m, pour une épaisseur de 1,2 mm.

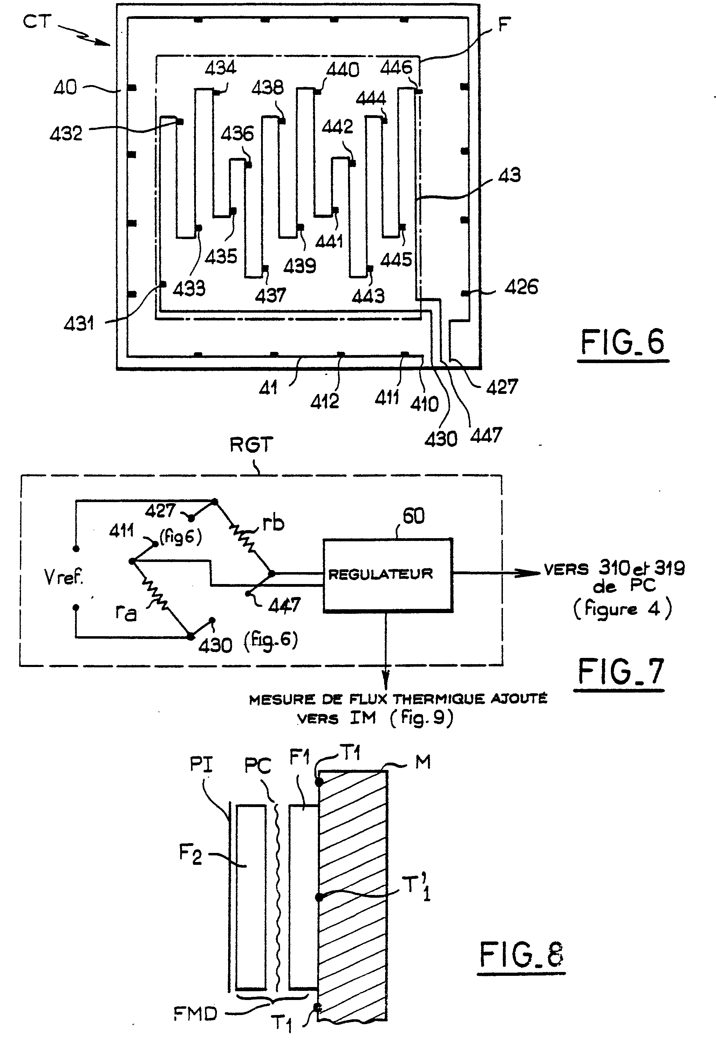

De son côté, la figure 4 illustre une plaque à résistance chauffante considérée à l'heure actuelle comme réalisation préférentielle du dispositif permettant un transfert thermique ajustable. Cette plaque est désignée dans son ensemble par PC. Sur un support plan, par exemple en Mylar, d'épaisseur 0,1 mm, et noté dans son ensemble 30, on réalise une résistance chauffante par photogravure d'une feuille de constantan de $5 \cdot 10^{-5}$ m d'épaisseur. Cette feuille va donc comporter des bandes telles que 310 et 311, qui sont réunies alternativement à l'une de leurs extrémités pour former un circuit fermé du haut en bas de la plaque, entre l'entrée 310 et la sortie, notée 319. L'ensemble de la plaque de constantan est noté 31.

Comme le montre la figure 5, on va mettre cette plaque PC de la figure 4 en sandwich entre deux plaques détectrices F1 et F2 (figure 3), avantageusement décalées d'un pas d'élément fluxmétrique l'une par rapport à l'autre, l'ensemble étant désigné par FMD. Bien entendu, les secteurs existant au niveau des deux plaques fluxmétriques F1 et F2 sont généralement parallèles, pour permettre de manière simple l'analyse de la répartition du flux. De son côté, la plaque de résistance chauffante PC possède des bandes telles que 310 et 311 qui peuvent être parallèles ou perpendiculaires aux secteurs des fluxmètres, une géométrie oblique pouvant d'ailleurs tout aussi bien être envisagée.

Sur la figure 6 est représentée l'organe de détection de différences de température qui va venir compléter l'unité de détection de flux. Cette figure 6 comporte tout d'abord un cadre F en trait d'axe, qui correspond au contour externe des deux réseaux fluxmétriques, ainsi que de la plaque thermique PC de la figure 4. L'organe de détection de la différence de température est noté globalement CT. Sur une plaque support, nettement plus grande que F, et de dimension par exemple 1,25 m × 1,25 m, réalisée en un matériau tel que du Kapton, sont collées des sondes de température résistives, telles que des résistances au nickel. Ces résistances sont interconnectées suivant deux circuits séparés, réalisés sur le support Kapton à la façon des circuits imprimés. Ainsi, un premier circuit 41 part de la borne 410, pour passer par les sondes au nickel 411, 412 etc. jusqu'à 426, le nombre total de sondes étant 16 dans ce circuit. Ce circuit suit un contour extérieur très proche de la périphérie du grand carré de côté 1,25 m, donc voisin par l'extérieur du contour F. On obtient alors entre les bornes 410 et 427 une indication de la température de paroi du mur, mais à l'extérieur de l'ensemble FMD de la figure 5.

Toujours sur le substrat 40 en Kapton est également prévu un réseau de sondes à résistance au nickel 431 à 446, donc également au nombre de 16, interconnectées dans un circuit 43, formé entre les bornes de sortie 430 et 447. Les sondes au nickel 431 à 446 sont disposées de manière convenable pour obtenir une bonne représentation de la température moyenne entre l'ensemble FMD de la figure 5 et la paroi à mesurer. La distribution tient compte aussi de la répartition en secteur des fluxmètres, les secteurs étant supposés verticaux sur la figure 6.

On voit immédiatement que, le nombre des sondes thermosensibles au Nickel étant le même dans les deux circuits 41 et 43, une simple comparaison de signaux prélevés d'une part entre les bornes 410 et 427 et d'autre part entre les bornes 430 et 447 permet de connaître la différence de température entre la partie arrière du dispositif FMD (circuit 43) et le reste de la paroi en surface (circuit 41).

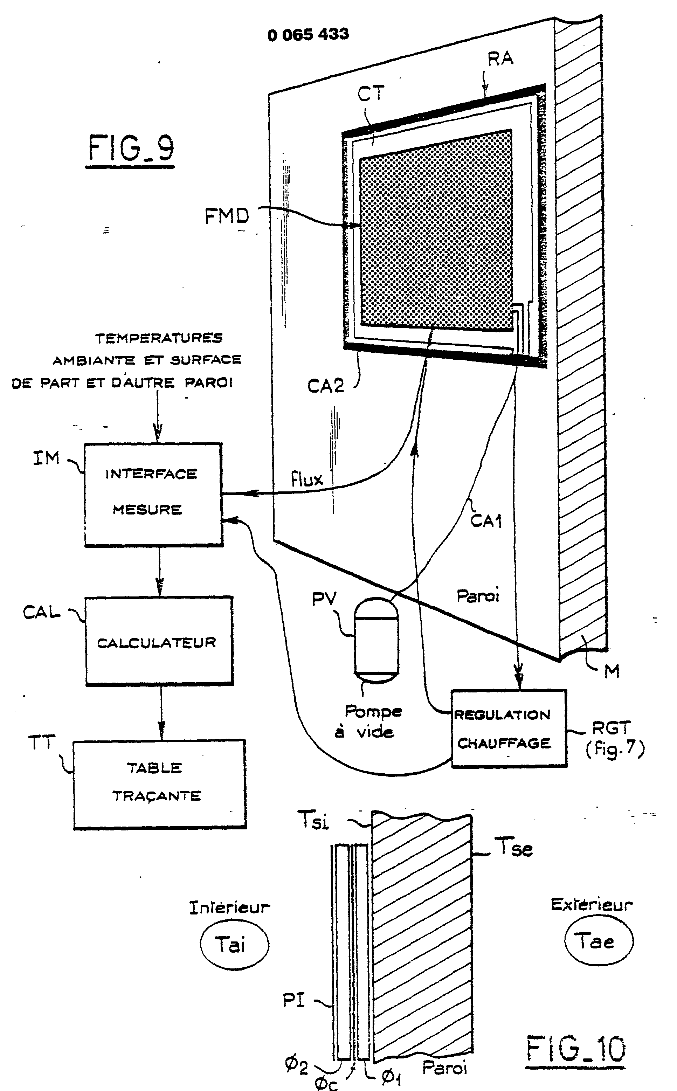

S'agissant de sondes résistives, celles-ci sont insérées (figure 7) dans deux bras opposés d'un pont de Wheatstone qui comportent par ailleurs des résistances d'équilibrage $r_a$ et $r_b$. L'une des diagonales du pont est alimentée à partir d'une tension de référence Vref, tandis que l'autre des diagonales va commander un dispositif régulateur 60.

Selon un aspect important de l'invention, le dispositif régulateur 60 alimente la plaque de chauffage PC de la figure 4, entre ses bornes 310 et 319, de manière à annuler avec précision l'écart de température détecté par le dispositif CT de la figure 6 entre la zone de contact entre la partie arrière des dispositifs fluxmétriques et la paroi, et le reste de la paroi. Les dimensions données plus haut permettent de comprendre que l'on mesure en fait la différence de température moyenne entre l'interface fluxmètre-paroi et une zone périphérique établie à environ 0,25 m du dispositif fluxmétrique.

Le dispositif de régulation 60 est construit de manière soignée, à l'aide d'asservissements électromécaniques, ou de préférence à thyristor, afin de limiter à une valeur maximale de 0,1 °C l'écart de température moyen entre le centre de la plaque fluxmétrique, chauffée, et sa périphérie externe, non chauffée.

Le dispositif régulateur 60 comporte également une sortie séparée pour indiquer à tout instant le flux thermique appliqué au dispositif par l'intermédiaire de la plaque chauffante PC. Ainsi, on connaît le flux thermique entrant dans le mur, qui est détecté par le fluxmètre F1 (figure 8) placé au contact du mur. Ce flux doit être égal au flux qui entre dans l'autre fluxmètre F2 par échange avec l'ambiance, auquel s'ajoute le flux thermique dissipé dans la plaque chauffante PC, qui compense selon l'invention l'effet de la résistance thermique du dispositif, lequel perturberait autrement la mesure de flux. La figure 8 schématise également en T'1 la température moyenne à l'interface entre le fluxmètre F1 et la paroi, température qui sera obtenue par les sondes au Nickel du circuit 43. La température de surface de la paroi T1 à l'extérieur du dispositif fluxmétrique est celle détectée au contraire par le circuit 41 de la figure 6.

L'asservissement RGT de la figure 7 fait en sorte que les températures T1 et T'1 soient égales au plus à 0,1° près. Cette disposition est considérée comme très importante pour l'obtention de bonnes mesures thermiques sur paroi, selon la présente invention.

Pour le système tel qu'il vient d'être décrit, le flux entrant à travers le dispositif F2 est en général plus important que le flux dispensé par la plaque chauffante PC. Le grand nombre de détecteurs fluxmétriques à la surface libre (fluxmètre F2) rend le système sensible aux plus légères perturbations de convexion ou de rayonnement. Cette sensibilité n'est pas gênante dans le cas où les flux entrants sont suffisamment importants ; dans le cas de plus faibles flux entrants, il est intéressant, dans une variante de l'invention, de modifier le rapport de ces deux flux, en apposant sur le fluxmètre externe F2 de la figure 8 une plaque isolante souple PI, par exemple en mousse de polyuréthane, ce qui améliore la qualité de la mesure en diminuant les effets parasites.

En pratique, la réalisation de l'unité de détection fluxmétrique selon la présente invention s'effectue de la manière suivante :

— on prépare chaque réseau fluxmétrique au format de la figure 3, par le tissage illustré sur la figure 2. Les bandes de phénoplaste armé de tissu sont encollées. Elles sont placées sous vide entre deux plaques de Mylar, puis chauffées à 135°, pour obtenir un durcissement de la colle. Les deux réseaux fluxmétriques sont alors individuellement vérifiés, notamment quant à l'intégralité de leurs pontets de liaison, au niveau de leurs échancrures.

— on réalise alors la plaque chauffante, par photogravure d'une feuille de constantan sur une feuille de Mylar, de la manière illustrée sur la figure 4. On vérifie là encore le bon fonctionnement de la plaque chauffante.

— on réalise enfin la plaque de détection thermique CT de la figure 6, en collant les sondes à résistance au Nickel sur la plaque de Kapton, les circuits 41 et 43 étant réalisés préalablement sous forme de circuit imprimé. Cette plaque est elle aussi vérifiée.

— on colle alors ensemble les différents éléments du dispositif, à savoir le fluxmètre F2, puis la plaque chauffante PC convenablement cadrée, puis le fluxmètre F1, l'ensemble étant alors chauffé sous vide pour obtenir un durcissement de la colle.

— le dispositif FMD ainsi obtenu fait alors l'objet d'un étalonnage. Pour cela, on place ce dispositif entre d'un côté un corps fortement isolant au plan thermique, et de l'autre côté un échangeur isotherme fin de grandes dimensions. Par chauffage de la plaque PC, on peut alors étalonner l'un des fluxmètres, l'autre n'étant que très peu traversé par la chaleur, puisqu'il est en contact avec un milieu fortement isolant. On peut d'ailleurs détecter la quantité de chaleur qui traversera quand même le milieu isolant utilisé. Après inversion du dispositif, et obtention de premières valeurs d'étalonnage pour le premier fluxmètre, on recommence avec le second fluxmètre, en tenant compte maintenant des premières valeurs d'étalonnage. En répétant cette opération un nombre de fois suffisant, on arrive à des valeurs d'étalonnage stables, qui permettent d'étalonner très correctement les deux fluxmètres. En général, deux opérations successives sont suffisantes.

On procède alors au collage de l'ensemble FMD de la figure 5 sur le contour F de la plaque de détection thermique CT de la figure 6, ce qui donne l'unité de détection fluxmétrique complète. Là encore, le collage peut se faire par enduction préalable à l'aide d'une colle, puis chauffage sous vide, par exemple entre deux feuilles de Mylar.

L'unité de détection fluxmétrique est alors disposée sur une paroi M, comme le montre la figure 9. Un

5

ruban adhésif RA, par exemple de largeur 30 mm, est placé sur la périphérie externe de la plaque de détection thermique CT, tandis qu'un léger cordon en tresse formant souplisseau périphérique se trouve placé sous cette plaque, pour définir un drain qui permettra le passage de l'air à des fins que l'on comprendra ci-après. On voit également sur la figure 9 le reste du dispositif, noté globalement FMD, avec la structure de la figure 5. Sur la partie inférieure droite de la plaque CT est prévue une connexion d'air Ca1, qui communique avec le souplisseau périphérique déjà cité, et va vers une pompe à vide PV, laquelle permet de faire un léger vide partiel sur l'ensemble du dispositif, afin de bien l'appliquer contre la paroi à mesurer. Une autre liaison CA2 permet une circulation d'air suffisante pour l'obtention de cette dépression partielle. Les connexions de sortie 410 et 427, 430 et 447 de la plaque CT vont vers le dispositif de régulation de chauffage RGT, qui comporte des éléments de la figure 7. Ce dispositif RGT est relié d'une part au câble de liaison central du dispositif FMD, afin d'aller alimenter convenablement la plaque chauffante PC, par ses bornes extrêmes 310 et 319, pour réaliser l'égalité entre les températures T1 et T'1 (figure 8). En même temps, le dispositif RGT produit une indication de la puissance thermique appliquée à la plaque, indication qui est adressée à un dispositif d'interface de mesure IM. Le dispositif d'interface de mesure IM reçoit également les informations de flux émanant au moins du fluxmètre F1 placé au contact de la paroi, et de préférence des deux fluxmètres F1 et F2. Disponibles sous forme de force électromotrice de thermocouple, ces informations fluxmétriques sont convenablement transformées au niveau de l'interface de mesure, pour pouvoir être appliquées sous forme numérique à un calculateur CAL. L'interface de mesure IM reçoit encore des informations relatives à la température ambiante de chaque côté du mur M ; de préférence, il reçoit également des informations sur la température de paroi de part et d'autre du mur M. L'ensemble de ces informations est traité au niveau du calculateur CAL, pour être affiché si nécessaire au niveau de la table traçante TT.

La figure 10 rappelle ainsi l'ensemble des informations apportées au calculateur, à savoir la température ambiante interne $T_{ai}$, la température de surface interne de la paroi $T_{si}$, la température de surface externe de la paroi $T_{se}$, et la température ambiante externe $T_{ae}$. Il s'y ajoute bien entendu le flux $\Phi_1$ mesuré par le fluxmètre au contact de la paroi, le flux $\Phi_c$ apporté par la plaque chauffante PC, et également, de préférence, le flux $\Phi_2$ mesuré par le réseau fluxmétrique F2.

De préférence, la plaque chauffante procédant par apport de chaleur, le dispositif de l'invention est placé sur le côté intérieur de la paroi à mesurer dans une habitation (ou généralement le côté le plus chaud).

Puisqu'il reçoit trois informations de flux redondantes $\Phi_1$, $\Phi_2$ et $\Phi_c$, le calculateur va pouvoir vérifier que les conditions de mesure sont correctes, à savoir que le flux entrant $\Phi_2$, augmenté du flux $\Phi_c$ apporté par la plaque chauffante, correspond bien au flux $\Phi_1$ traversant l'interface du dispositif avec la paroi.

Il y a lieu bien entendu d'attendre que s'établisse un régime équilibré, avec T1 = T'1 (figure 8).

Après cela, le calculateur peut effectuer les opérations consistant à déterminer à chaque acquisition de données le rapport $\Sigma\Phi/\Sigma\Delta T$ des flux thermiques cumulés aux différences de températures cumulées, avec $\Delta T = T_{ae} - T_{ei}$. Ces opérations sont alors poursuivies jusqu'à ce que le rapport déterminé tende vers une valeur sensiblement constante, qui est alors représentative des coefficients de transmission K du mur, selon la relation suivante :

$$\Phi_m = K \cdot \Delta T_m \tag{1}$$

Dans cette relation, la quantité $\Phi_m$ représente le flux cumulé, pris en moyenne, avec :

$$\Phi_m = \frac{1}{n} \sum_{t_0}^{t_n} \Phi(t) \tag{2}$$

Dans cette relation, $t_0$ représente l'instant de départ de la mesure, et $t_n$ représente l'instant présent de la mesure, tandis que $\Phi(t)$ représente chacune des mesures courantes de $t_0$ à $t_n$.

De son côté, $\Delta T_m$ représente la valeur moyenne des écarts de température auxquels a été soumise la paroi de $t_0$ à $t_n$, soit :

$$\Delta T_m = \frac{1}{n} \sum_{t_0}^{t_n} \Delta T(t) \tag{3}$$

Dans cette relation, $\Delta T(t)$ représente la valeur de l'écart courant de température ambiante entre les deux faces de la paroi.

Les conditions de convergence du rapport $\Sigma\Phi/\Sigma\Delta T$ vers la valeur désirée du coefficient de transmission thermique en régime permanent ne peuvent pas être complètement définies. On estime à l'heure actuelle que cette convergence est assurée si la paroi est soumise à un signal quasi périodique, tel que la valeur moyenne $\Delta T_m$ de l'écart de température ne soit pas nulle.

Il suffit alors de choisir un temps de mesure $t_n - t_0$ suffisamment grand devant la valeur du signal et la constante de temps de la paroi pour que le rapport précité converge vers la valeur désirée du coefficient de transmission thermique K.

En pratique, il s'est avéré que l'intervalle de temps nécessaire est de l'ordre de deux à trois fois la constante de temps de la paroi.

Comme le montrent les relations précédentes, la mesure pratique consiste à calculer, à chaque pas comprenant une nouvelle acquisition des valeurs d'entrée, le rapport des valeurs cumulées $\Sigma\Phi/\Sigma\Delta T$ pendant le temps nécessaire pour que l'amortissement produit par l'intégration de la quantité de chaleur échangée donne un coefficient K suffisamment constant. La durée de la mesure dépend donc de la constante de temps de la paroi, mais doit être allongée pour obtenir des oscillations de la valeur de K de plus en plus faibles. L'erreur sur cette valeur est aussi liée au rapport de l'amplitude du signal extérieur sur l'écart de températures moyennes intérieures et extérieures qui sont également variables.

A cet égard, selon un autre aspect important du procédé selon l'invention, on tient compte des échanges superficiels. En effet, lorsque les coefficients d'échanges intérieurs et extérieurs sont constants, la mesure du coefficient K obtenue par le rapport des flux aux écarts de températures superficiels est suffisante. Et cette mesure est d'autant plus aisée que les coefficients d'échanges sont plus élevés que ceux provoqués par les écoulements aléatoires de convexion naturelle de part et d'autre de la paroi.

Mais, en réalité, lors de la mesure en site naturel, les coefficients d'échanges en particulier à l'extérieur, sont essentiellement variables en raison notamment du vent, des échanges radiatifs avec le ciel, et le sol (neige, pluie, par exemple). De ce fait, des déphasages supplémentaires peuvent survenir entre le flux mesuré sur la paroi intérieure et la température extérieure. De plus, la mesure du coefficient K de la paroi doit être exprimée en définitive pour des valeurs de coefficients d'échanges conventionnels. On a donc estimé comme souhaitable de procéder en même temps à la mesure des coefficients d'échanges réels, afin de corriger la valeur de K. Cela peut être fait facilement, dès lors que l'on connaît en même temps les températures ambiantes et superficielles de part et d'autre de la paroi. L'acquisition de ces informations a déjà été décrite plus haut.

Expérimentation

Des essais ont été effectués par le demandeur, sur des murs pour lesquels des déterminations du coefficient K venaient d'être faites par les méthodes classiques de laboratoire, faisant intervenir une détermination par le procédé dit de la boîte chaude gardée.

Les essais ont tout d'abord été effectués en imposant du côté chaud une température constante de 20 °C, et une variation sinusoïdale de l'ambiance froide. On a pu constater une concordance satisfaisante entre les résultats obtenus par ces mesures, et les mesures classiques. Il a été vérifié que la mesure de K obtenue par le procédé selon l'invention correspondait à ± 1 % près avec la valeur de K mesurée en régime permanent sur les mêmes murs.

Ces essais ont permis aussi de bien définir la procédure de mesure, en particulier le calage du zéro du système de régulation de température qui sert à imposer une différence nulle entre la température de contact du dispositif fluxmétrique avec le mur et la température en périphérie de ce dispositif, ainsi que la détermination des temps de base de l'action intégrale du système de régulation, et la valeur de son action proportionnelle.

Après ces mises au point, l'appareillage a été utilisé sur des maquettes de construction expérimentales.

Sur des murs classiques, il s'est avéré que la mesure du coefficient K peut être obtenue dans des délais assez courts pour des conditions climatiques favorables. D'autres expériences ont été conduites pour des conditions différentes notamment quant à la structure du mur, ainsi qu'aux conditions climatiques externes. Il s'est avéré dans tous les cas qu'on pouvait obtenir une mesure de coefficient K satisfaisante en poursuivant la mesure pendant une durée de l'ordre d'une centaine d'heures.

Globalement, des expériences ainsi conduites ont montré que l'appareillage décrit permet de mesurer le coefficient K sur des parois opaques dans un site naturel en se servant des signaux climatiques réels, la précision de la mesure est fonction des conditions climatiques et de l'écart des températures moyennes intérieure et extérieure. Avec des données climatiques de celles qui existent dans la région parisienne, on peut accéder à une précision sur l'évaluation du coefficient K inférieure ou égale à ± 5 % sur la période des 7 mois les plus froids de l'année dans la région parisienne. Cette précision comporte bien entendu un progrès important par rapport avec les erreurs de 100 % couramment rencontrées dans les dispositifs de la technique antérieure.

Bien entendu, la présente invention n'est pas limitée au mode de réalisation décrit. En particulier, en variante de réalisation des réseaux fluxmétriques, on peut réaliser des matrices de fluxmètres élémentaires, par exemple au nombre de 256. Cette plaque peut être réalisée par une technique de circuit photogravé, où les éléments sont reliés par des multiplexeurs incorporés au circuit, avec même une carte d'interfaçage adresse plus signal intégrée à la plaque elle-même. Cette disposition permet la lecture de chaque point de la matrice jusqu'au calculateur, et d'obtenir par conséquent le tracé de la carte des flux. Le dispositif décrit plus haut ne permettait d'obtenir des indications de flux que dans les secteurs S1 à S16 de la figure 3.

On peut alors mesurer le coefficient K selon le procédé déjà décrit, et analyser de manière très fine les défauts d'isolation et les ponts thermiques pouvant exister au sein de la paroi. Par comparaison aux méthodes déjà existantes à l'aide d'une caméra infra-rouge, on voit que l'on peut sur la présente invention procéder à des évaluations quantitatives, et se rendre compte de l'importance thermique de chacun des défauts.

**Revendications**

1. Procédé de mesure du coefficient de transmission thermique K d'une paroi à partir d'une mesure de flux thermique et d'une mesure différentielle de température de part et d'autre de la paroi, caractérisé par les opérations suivantes :

a) mesurer répétitivement les températures d'ambiance $T_{ae}$, $T_{ai}$ de chaque côté de la paroi,

b) mesurer aux mêmes instants le flux thermique $\Phi$ traversant une zone de contour (F) prédéterminé d'un côté de la paroi,

c) déterminer le rapport $\Sigma\Phi/\Sigma\Delta T$ des flux thermiques cumulés aux différences de températures cumulées $\Delta T = T_{ae} - T_{ai}$, et

d) poursuivre les opérations a) à c) jusqu'à ce que ledit rapport tende vers une valeur sensiblement constante.

2. Procédé selon la revendication 1, caractérisé par le fait qu'à l'opération a), on mesure en outre les températures de surface ($T_{se}$, $T_{si}$) de chaque côté de la paroi, et qu'à l'opération b) chaque valeur de flux est corrigée selon les coefficients d'échange entre la paroi et l'ambiance de part et d'autre de celle-ci.

3. Dispositif détecteur distribué pour la mesure du coefficient de transmission thermique K d'une paroi, du type comportant un moyen fluxmétrique disposé sur la paroi et un moyen de mesure différentielle de température de part et d'autre de la paroi, permettant la mise en œuvre du procédé selon la revendication 1, caractérisé par le fait qu'il comporte en combinaison :

— un premier réseau fluxmétrique plan (F1), à placer près de la paroi, et recouvrant ladite zone de contour (F) prédéterminé sur une face de la paroi,

— un second réseau fluxmétrique plan (F2), ajouté sur le premier, et de même contour externe que lui,

— entre les deux réseaux fluxmétriques, un élément plan capable de transferts thermiques ajustables (PC),

— des moyens (CT) permettant de détecter la différence des températures moyennes entre la face du premier réseau (F1) qui est en contact avec ladite face de la paroi et une zone voisine en surface de ladite face de la paroi,

— des moyens (RGT) pour commander l'élément de transfert thermique ajustable (PC) dans le sens tendant à annuler la différence de température détectée,

— des moyens (IM) d'acquisition des données de températures d'ambiance $T_{ae}$, $T_{ai}$ de chaque côté de la paroi et du flux thermique $\Phi$, traversant la zone de contour (F) prédéterminé, à partir d'au moins le premier réseau fluxmétrique, et

— des moyens de calcul (CAL) pour déterminer le rapport $\Sigma\Phi/\Sigma\Delta T$ des flux thermiques cumulés aux différences de températures cumulées $\Delta T = T_{ae}-T_{ai}$.

4. Dispositif selon la revendication 3, caractérisé par le fait que l'élément de transfert thermique ajustable (PC) est un générateur électrothermique.

5. Dispositif selon la revendication 4, caractérisé par le fait que l'élément de transfert thermique comprend un circuit formant résistance chauffante (31) solidaire d'un support plan (30).

6. Dispositif selon l'une des revendications 3 à 5, caractérisé par le fait que les moyens (CT) de détection de la différence de température comprennent, sur un support plan, un premier motif d'éléments thermosensibles (411, 412, ... 426) interconnectés (41), le motif étant placé adjacent par l'extérieur au contour des réseaux fluxmétriques, et un second motif d'éléments thermosensibles (431 à 446) interconnectés (43), ce second motif étant placé entre le premier réseau fluxmétrique et la paroi.

7. Dispositif selon la revendication 6, caractérisé par le fait que les deux motifs interconnectés sont respectivement placés dans les bras opposés d'un pont de Wheatstone.

8. Dispositif selon l'une des revendications 3 à 7, caractérisé par le fait que chacun des réseaux fluxmétriques comporte au moins un assemblage en série additive de couples thermoélectriques (110-111, 111-112, etc.) alternativement disposés de part et d'autre d'une paroi auxiliaire (21, 22, 23, etc.).

9. Dispositif selon la revendication 8, caractérisé par le fait que chaque réseau fluxmétrique est subdivisé en secteurs (S1 à S16) accessibles individuellement.

**Claims**

1. Method for measuring the coefficient of thermal transmission K of a wall, from a measurement of the thermal flux and a differential measurement of temperature on either side of the wall, characterised by the following operations :

a) repetitively measuring the ambient temperatures $T_{ae}$, $T_{ai}$ on each side of the wall,

b) at the same time measuring the thermal flux $\Phi$ passing through an area of pre-determined contour (F) on one side of the wall,

c) determining the ratio $\Sigma\Phi/\Sigma\Delta T$ of the cumulative thermal flux to the cumulative temperature differences $\Delta T = T_{ae} - T_{ai}$, and

d) continuing the operations a) to c) until the said ratio tends towards a substantially constant value.

2. Method according to Claim 1, characterised by the fact that at the time of operation a) one also measures the surface temperatures ($T_{se}$, $T_{si}$) on each side of the wall and at the time of operation b) each flux value is corrected according to the coefficients of exchange between the wall and the atmosphere on either side of the latter.

3. Distributed detector device for measuring the coefficient of thermal transmission K of a wall, of the type comprising flux-metering means located on the wall and means for a differential measurement of temperature on either side of the wall, making it possible to carry out the method according to claim 1, characterised by the fact that it comprises in combination :

— a first flat flux-metering system (F1), to be located close to the wall and covering the said area of pre-determined contour (F) on one side of the wall,

— a second flat flux-metering system (F2), added to the first and of the same outer contour as the latter,

— between the two flux-metering systems a flat member capable of adjustable thermal transfers (PC),

— means (CT) making it possible to detect the average temperature difference between the face of the first system (F1) which is in contact with the said face of the wall and an adjacent surface area of the said face of the wall,

— means (RGT) for controlling the adjustable thermal transfer member (PC) in the direction tending to cancel out the detected temperature difference,

— means (IM) for the acquisition of data relating to ambient temperatures $T_{ae}$, $T_{ai}$, on each side of the wall and to the thermal flux ($\Phi$) passing through the area of pre-determined contour (F) from at least the first flux-metering system,

— calculating means (CAL) for determining the ratio $\Sigma\Phi/\Sigma\Delta T$ of the cumulative thermal flux to the cumulative temperature differences $\Delta T = T_{ae} - T_{ai}$.

4. Apparatus according to Claim 3, characterised by the fact that the ajustable thermal transfer member (PC) is an electro-thermal generator.

5. Apparatus according to Claim 4, characterised by the fact that the thermal transfer member comprises a circuit forming a heating resistance (31) integral with a flat support (30).

6. Apparatus according to one of Claims 3 to 5, characterised by the fact that the means (CT) for detecting the temperature difference comprise, on a flat support, a first pattern of thermo-sensitive members (411, 412, ... 426), which are inter-connected (41), the pattern being placed externally adjacent to the contour of the flux-metering systems and a second pattern of thermo-sensitive members (431 to 446) which are inter-connected (43), this second pattern being placed between the first flux-metering system and the wall.

7. Apparatus according to Claim 6, characterised by the fact that the two inter-connected patterns are respectively located in the opposite arms of a wheatstone bridge.

8. Apparatus according to one of Claims 3 to 7, characterised by the fact that each of the flux-metering systems comprises at least one additive series arrangement of thermocouples (110-111, 111-112, etc.) arranged alternately on either side of an auxiliary wall (21, 22, 23, etc.).

9. Apparatus according to Claim 8, characterised by the fact that each flux-metering system is subdivided into sectors (S1 to S16) which are individually accessible.

## Patentansprüche

1. Verfahren zum Messen der Wärmedurchlaßzahl K einer Wand aufgrund einer Wärmeflußmessung und einer Temperaturunterschiedsmessung beidseitig der Wand, gekennzeichnet :

a) wiederholtes Messen der Umgebungstemperaturen $T_{ae}$, $T_{ai}$ auf jeder Seite der Wand,

b) gleichzeitiges Messen des Wärmeflusses $\Phi$, der durch einen Bereich mit vorbestimmtem Umriß (F) von einer Seite der Wand hindurchgeht,

c) Bestimmen des Verhältnisses $\Sigma\Phi/\Sigma\Delta T$ der aufaddierten Wärmeflüsse zu den aufaddierten Temperaturunterschieden $\Delta T = T_{ae} - T_{ai}$, und

d) Durchführen der Schritte a) bis c) bis das Verhältnis einen im wesentlichen konstanten Wert zustrebt.

2. Verfahren nach Anspruch 1, dadurch gekennzeichnet, daß man beim Schritt a) ferner die Oberflächentemperaturen ($T_{se}$, $T_{si}$) von jeder Seite der Wand mißt und daß jeder Flußwert beim Schritt b) gemäß den Austauschkoeffizienten zwischen der Wand und der Umgebung auf ihren beiden Seiten korrigiert wird.

3. Verteilte Erfassungseinrichtung zum Messen der Wärmedurchlaßzahl K einer Wand von der Art,

die eine auf der Wand angeordnete Flußmessereinrichtung und eine Meßeinrichtung für den Temperaturunterschied zwischen den beiden Seiten der Wand umfaßt, zur Durchführung des Verfahrens nach Anspruch 1, dadurch genkennzeichnet, daß die Erfassungseinrichtung in Kombination umfaßt :
— ein erstes, ebenes Flußmessernetz (F1), welches nahe der Wand anzuordnen ist und den vorbestimmten Umrißbereich (F) auf einer Seite der Wand überdeckt,
— ein zweites, ebenes Flußmessernetz (F2), welches auf dem ersten hinzugefügt ist und den gleichen äußeren Umriß wie dieses aufweist,
— ein ebenes, in Bezug auf die Wärmeübertragung einstellbares Element (PC) zwischen den zwei Flußmessernetzen,
— Mittel (CT), mit denen der Durchschnittstemperaturunterschied zwischen der Seite des ersten Netzes (F1), die mit der genannten Wand in Berührung steht, und einem benachbarten Bereich der genannten Wand erfaßbar ist,
— Mittel (RGT) zur Steuerung des Elementes (PC) für die einstellbare Wärmeübertragung im Sinne einer Aufhebung des erfaßten Temperaturunterschiedes,
— Erfassungsmittel (IM) für die Daten der Umgebungstemperaturen $T_{ac}$, $T_{ai}$ auf jeder Seite der Wand und des durch den vorbestimmten Umrißbereich (F) hindurchgehenden Wärmeflusses $\Phi$ aufgrund wenigstens des ersten Flußmessernetzes,
— Rechenmittel (CAL) zum Bestimmen des Verhältnisses $\Sigma\Phi/\Sigma\Delta T$ zwischen den aufaddierten Wärmeflüssen und den aufaddierten Temperaturdifferenzen $\Delta T = T_{ae} - T_{ai}$.
4. Einrichtung nach Anspruch 3, dadurch gekennzeichnet, daß das Element (PC) mit einstellbarer Wärmeübertragung ein Elektrowärmegenerator ist.
5. Einrichtung nach Anspruch 4, dadurch gekennzeichnet, daß das Element für die Wärmeübertragung einen Schaltkreis umfaßt, der einen fest mit einer ebenen Stütze (30) verbundenen Heizwiderstand (31) bildet.
6. Einrichtung nach einem der Ansprüche 3 bis 5, dadurch gekennzeichnet, daß die Mittel (CT) zum Erfassen des Temperaturunterschiedes ein erstes Muster aus miteinander verbundenen (41), wärmeempfindlichen Elementen (411, 412 ... 426) auf einer ebenen Stütze aufweisen, wobei das Muster von außen nahe dem Umriß des Flußmessernetzes angeordnet ist, sowie ein zweites Muster von miteinander verbundenen (43) wärmeempfindlichen Elementen (431 bis 446) aufweisen, wobei das zweite Muster zwischen dem ersten Flußmessernetz und der Wand angeordnet ist.
7. Einrichtung nach Anspruch 6, dadurch gekennzeichnet, daß die zwei miteinander verbundenen Muster jeweils in gegenüberliegenden Zweigen eine Wheatstone'schen Brücke angeordnet sind.
8. Einrichtung nach einem der Ansprüche 3 bis 7, dadurch gekennzeichnet, daß jedes Flußmessernetz eine additive Reihenanordnung von Thermoelementpaaren (110-111, 111-112, usw.) aufweist, die abwechselnd beidseitig einer zusätzlichen Wand (21, 22, 23, usw.) angeordnet sind.
9. Einrichtung nach Anspruch 8, dadurch gekennzeichnet, daß jedes Flußmessernetz in Abschnitte (S1 bis S16) unterteilt ist, die einzeln zugängig sind.

**0 065 433**

FIG_1

Cu
Constantan

FIG_2

Cu  Cu

1 paire de sortie

| S1 | S2 | S3 | S4 | S5 | S6 | S7 | S8 | S9 | S10 | S11 | S12 | S13 | S14 | S15 | S16 |

bandes trame

16 secteurs verticaux comprenant chacun 4 bandes bi-métalliques verticales interconnectées

F

16 paires de sortie flux

FIG_3

1

FIG_4

FIG_5

0 065 433

FIG. 6

RGT

Vref.

427
411 (fig6)
rb
ra
447
430 (fig.6)

60
REGULATEUR

VERS 310 et 319
de PC
(figure 4)

FIG. 7

MESURE DE FLUX THERMIQUE AJOUTÉ
VERS IM (fig. 9)

PI  PC  F1  T1  M

F2

T'1

FMD  T1

FIG. 8

3

**0 065 433**

FIG_9

FIG_10